# EUROPEAN PATENT APPLICATION

(11) **EP 4 797 433 A1**
(43) Date of publication of application: **26.08.2026**
(21) Application number: 24884548.9
(22) Date of filing: 23.10.2024
(51) Int. Cl.: H01P 1/18

(54) **PHASE-SHIFTER, ANTENNA, AND BASE STATION**

(30) Priority: 31.10.2023 CN 202311440522
(71) Applicant: HUAWEI TECHNOLOGIES CO., LTD., Shenzhen 518129 (CN)
(72) Inventor: BAI, Xue, Shenzhen, Guangdong 518129 (CN); HE, Naixiao, Shenzhen, Guangdong 518129 (CN); CUI, He, Shenzhen, Guangdong 518129 (CN); XIAO, Weihong, Shenzhen, Guangdong 518129 (CN); SUN, Pengpeng, Shenzhen, Guangdong 518129 (CN)
(74) Representative: Goddar, Heinz J.
(86) International application number: PCT/CN2024/126857
(87) International publication number: WO 2025/092544

(57) **Abstract**

Embodiments of this application provide a phase shifter, an antenna, and a base station. The phase shifter includes a cavity and a stripline. The cavity includes a side plate and a plurality of partition plates. The plurality of partition plates are spaced apart on the side plate, and the plurality of partition plates and the side plate define at least one accommodating space. The strip line may include a feeding portion and an output portion, the feeding portion may be disposed in one or more accommodating spaces, a dielectric portion is disposed between the feeding portion and a partition plate corresponding to an accommodating space **in** which the feeding portion is located, the output portion is connected to the feeding portion and extends outside the accommodating space, and the output portion is configured to be connected to a radiating element of an antenna. According to the foregoing solution, the cavity can be miniaturized, that is, the phase shifter can be miniaturized. This can reduce blockage of the phase shifter to an antenna array, and reduce impact of the phase shifter on a radiation pattern of the antenna array, thereby improving performance of the antenna array.

## Description

### CROSS-REFERENCE TO RELATED APPLICATIONS

This application claims priority to Chinese Patent Application No. 202311440522.9, filed with the China National Intellectual Property Administration on October 31, 2023 and entitled "PHASE SHIFTER, ANTENNA, AND BASE STATION", which is incorporated herein by reference in its entirety.

### TECHNICAL FIELD

Embodiments of this application relate to the field of antenna technologies, and in particular, to a phase shifter, an antenna, and a base station.

### BACKGROUND

In antennas of a base station, radiating elements (also referred to as radiating elements) are connected to a feeding network. The feeding network generally includes controlled-impedance transmission lines. The feeding network may feed signals to the radiating elements based on specific amplitudes and phases, or send received signals to a signal processing unit of the base station based on specific amplitudes and phases. The feeding network may include a phase shifter, a combiner, a filter, and the like. The phase shifter is configured to change a maximum radiation direction of an antenna signal. The combiner is configured to combine signals of different frequencies into one channel of signals for transmission via the antennas, or is configured to divide signals received by the antennas into a plurality of channels of signals based on different frequencies for transmission to the signal processing unit for processing. The filter is configured to filter out interference signals. However, the existing phase shifter has a large size, causing significant blockage to a massive multiple-input multiple-output (Massive MIMO, MM) antenna array, and affecting performance of the antenna array.

### SUMMARY

Embodiments of this application provide a phase shifter, an antenna, and a base station, to reduce blockage to an antenna array, thereby improving performance of the antenna array.

According to a first aspect, this application provides a phase shifter. The phase shifter may include a cavity and a stripline, where the cavity may include a side plate and a plurality of partition plates, the plurality of partition plates are spaced apart on the side plate, and the plurality of partition plates and the side plate define at least one accommodating space. The stripline may include a feeding portion and an output portion, the feeding portion may be disposed in one or more accommodating spaces, a dielectric portion is disposed between the feeding portion and the partition plate corresponding to the accommodating space in which the feeding portion is located, the output portion is connected to the feeding portion and may extend outside the accommodating space, and the output portion may be connected to a radiating element of an antenna.

In the technical solutions provided in this application, the cavity includes the at least one accommodating space, and the feeding portion is disposed in the at least one accommodating space. This can physically isolate feeding portions located in different accommodating spaces, and can avoid electromagnetic coupling between the feeding portions located in the different accommodating spaces, so that a distance between the feeding portions located in the different accommodating spaces can be reduced. Therefore, a cross-sectional area of the cavity can be reduced, that is, a volume of the cavity can be reduced, so that the cavity can be miniaturized, that is, the phase shifter can be miniaturized. This can reduce blockage of the phase shifter to an antenna array, and reduce impact of the phase shifter on a radiation pattern of the antenna array, thereby improving performance of the antenna array. When the phase shifter provided in this application is used in the antenna, a signal may be transmitted between the feeding portion and a plurality of radiating elements, so that a phase difference can be achieved between two adjacent radiating elements by changing arrangement of the dielectric portion.

In a specific implementation solution, the output portion may include a first connecting section and a first transition section, one end of the first connecting section may be connected to the feeding portion, the first transition section may be located outside the accommodating space, one end of the first transition section may be connected to the other end of the first connecting section, and the other end of the first transition section may be connected to the radiating element of the antenna. A connection between the output portion and the radiating elements is convenient, and no additional transition portion is needed.

In a specific implementation solution, the output portion may further include a second connecting section, the second connecting section may be located outside the accommodating space, and the other end of the first transition section may be connected to the radiating element of the antenna via the second connecting section. The output portion can more easily access the radiating element, thereby making a connection to the radiating element more convenient.

In a specific implementation solution, there may be a plurality of feeding portions, and the plurality of feeding portions may be disposed in the at least one accommodating space; and the stripline further includes a transition portion, and the feeding portions located in the different accommodating spaces may be connected via the transition portion. A layout space of the stripline is large, and the feeding portions are flexibly disposed.

In a specific implementation solution, the transition portion may include a third connecting section, a second transition section, and a fourth connecting section that are sequentially connected, one end of the third connecting section may be connected to the feeding portion located in one accommodating space, one end of the fourth connecting section may be connected to the feeding portion located in another accommodating space, the second transition section may be located outside the accommodating space, and both ends of the second transition section may be respectively connected to the other end of the third connecting section and the other end of the fourth connecting section. The feeding portions in the different accommodating spaces can be connected, the stripline can transition between the different accommodating spaces, and no additional transition portion is needed.

In a specific implementation solution, there may be an overlapping part in projections of the feeding portions located in the different accommodating spaces in a second direction, the second direction is perpendicular to a first direction, and the first direction is an extension direction of the side plate. The stripline may be meandered across the different accommodating spaces.

In a specific implementation solution, there may be an overlapping part in projections of the feeding portions located in a same accommodating space in a third direction, the third direction is perpendicular to the first direction and the second direction, the second direction is perpendicular to the first direction, and the first direction is the extension direction of the side plate. The stripline may be meandered in a same accommodating space.

In a specific implementation solution, the dielectric portion may have a slot, and the slot may be staggered from the overlapping part in the second direction. This can ensure that the dielectric portion corresponds to the feeding portion in the second direction, reduce an area of the dielectric portion, improve effective utilization of the dielectric portion, and reduce costs.

In a specific implementation solution, the partition plates may be respectively disposed on both sides of the side plate in the third direction, the third direction is perpendicular to the first direction and the second direction, the second direction is perpendicular to the first direction, and the first direction is the extension direction of the side plate. Accommodating spaces may be defined on the both sides of the side plate in the third direction, and striplines may be arranged on the both sides of the side plate in the third direction, so that the layout space of the stripline can be increased, and layout flexibility of the stripline can be improved.

In a specific implementation solution, the partition plates are disposed perpendicular to the side plate, to facilitate forming of the cavity.

According to a second aspect, this application further provides an antenna. The antenna may include a radiating element and the phase shifter according to any one of the possible implementations of the first aspect, where there may be a plurality of radiating elements, the plurality of radiating elements may be arranged in a first direction, and the first direction is an extension direction of the side plate; a balun of each of the radiating elements may be fixedly connected to the cavity; and a feeder of each of the radiating elements may be electrically connected to the feeding portion via the output portion. The phase shifter causes small blockage to an antenna array, and performance of the antenna array can be improved.

In a specific implementation solution, the antenna may further include a reflection panel, where the reflection panel and the radiating element may be respectively disposed on both sides of the phase shifter in a second direction, and the reflection panel may be spaced apart from the phase shifter; or the reflection panel and the radiating element may be disposed on a same side of the phase shifter in the second direction, and the balun of the radiating element may pass through the reflection panel. The reflection panel may enhance a signal receiving or transmitting capability of the antenna, and may further block or shield interference caused by another electromagnetic wave from a back side of the reflection panel to antenna signal receiving.

According to a third aspect, this application further provides a base station. The base station may include a signal processing unit and the antenna according to any one of the possible implementations of the second aspect, where the signal processing unit may be electrically connected to the feeding portion, so as to be electrically connected to the radiating element. Performance of the antenna is superior, and performance of the base station is reliable with high stability.

### BRIEF DESCRIPTION OF DRAWINGS

FIG. 1 is a diagram of a system architecture to which an embodiment of this application is applicable;
FIG. 2 is a diagram of a structure of an antenna feeding system of the base station according to the embodiment shown in the foregoing figure;
FIG. 3 is a diagram of a structure of a base station antenna according to a possible embodiment of this application;
FIG. 4 is an exploded view of a structure of a phase shifter according to a possible embodiment of this application;
FIG. 5 is a diagram of a structure of the cavity of the phase shifter according to an embodiment of this application;
FIG. 6 is a diagram of a structure of the cavity of the phase shifter according to an embodiment of this application;
FIG. 7 is a diagram of another structure of the cavity of the phase shifter according to an embodiment of this application;
FIG. 8 is a diagram of another structure of the cavity of the phase shifter according to an embodiment of this application;
FIG. 9 is a diagram of another structure of the cavity of the phase shifter according to an embodiment of this application;
FIG. 10 is a diagram of another structure of the cavity of the phase shifter according to an embodiment of this application;
FIG. 11 is a diagram of a structure of the phase shifter according to an embodiment of this application;
FIG. 12 is a diagram of a structure of an antenna according to an embodiment of this application;
FIG. 13 is a diagram of a structure of the antenna according to an embodiment of this application;
FIG. 14 is a diagram of another structure of the antenna according to an embodiment of this application; and
FIG. 15 is a diagram of a structure of the stripline of the phase shifter according to an embodiment of this application.

### Reference numerals:

10: antenna; 20: pole; 30: antenna adjustment support; 40: radome; 50: radio frequency processing unit; 60: signal processing unit;
70: cable; 80: feeding network; 11: radiating element; 12: reflection panel; 81: transmission component; 82: calibration network; 83: phase shifter;
84: combiner; 85: filter; 100: cavity; 200: stripline; 300: dielectric portion; 400: radiating element; 101: side plate; 102: partition plate;
201: feeding portion; 202: output portion; 203: transition portion; 301: slot; 401: balun; 402: first welding point; 403: second welding point;
2021: first connecting section; 2022: first transition section; 2023: second connecting section; 2031: third connecting section; 2032: second transition section;
2033: fourth connecting section.

### DESCRIPTION OF EMBODIMENTS

To make the objectives, technical solutions, and advantages of this application clearer, the following further describes embodiments of this application in detail with reference to the accompanying drawings. However, example implementations may be implemented in a plurality of forms, and are not to be construed as being limited to implementations described herein. Identical reference numerals in the accompanying drawings denote identical or similar structures. Therefore, repeated description thereof is omitted. Expressions of positions and directions in embodiments of this application are described by using the accompanying drawings as examples. However, changes may also be made as needed, and all the changes fall within the protection scope of this application. The accompanying drawings in embodiments of this application are merely used to illustrate relative position relationships and do not represent an actual scale.

Specific details are set forth in the following descriptions for easy of understanding this application. However, embodiments of this application can be implemented in a plurality of manners different from those described herein, and a person skilled in the art can perform similar promotion without departing from the connotation of embodiments of this application. Therefore, this application is not limited to the following disclosed specific embodiments.

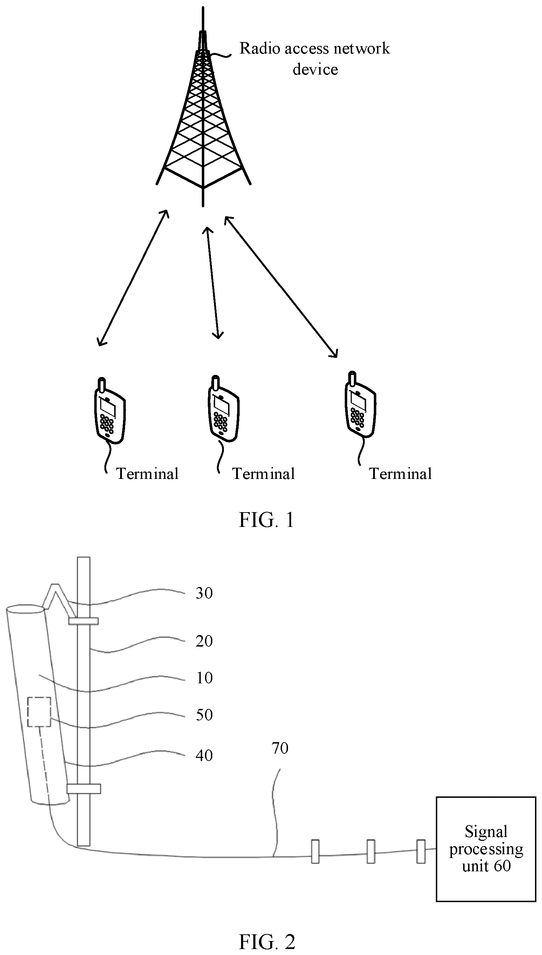

FIG. 1 is an example of a diagram of a system architecture to which an embodiment of this application is applicable. As shown in FIG. 1, the system architecture may include a radio access network device and terminals, for example, including but not limited to a base station shown in FIG. 1. Wireless communication may be implemented between the radio access network device and the terminal. The radio access network device may be located in a base station subsystem (base station subsystem, BSS), a UMTS terrestrial radio access network (UMTS terrestrial radio access network, UTRAN), or an evolved universal terrestrial radio access network (evolved universal terrestrial radio access network, E-UTRAN), and is configured to perform cell coverage of a radio signal, to implement a connection between a terminal device and a radio frequency end of a wireless network. Specifically, the base station may be a base station (base transceiver station, BTS) in a GSM or CDMA system, or may be a base station (NodeB, NB) in a WCDMA system, or may be an evolved NodeB (evolved NodeB, eNB or eNodeB) in an LTE system, or may be a radio controller in a cloud radio access network (cloud radio access network, CRAN) scenario. Alternatively, the base station may be a relay station, an access point, a vehicle-mounted device, a wearable device, a base station in a 5G network, a base station in a future evolved PLMN network, or the like, for example, a new radio base station. This is not limited in embodiments of this application.

FIG. 2 is a diagram of a structure of an antenna feeding system of the base station according to the embodiment shown in the foregoing figure. The antenna feeding system of the base station may generally include structures such as an antenna 10, a pole 20, and an antenna adjustment support 30. The antenna 10 of the base station includes a radome 40. The radome 40 has a good electromagnetic wave penetration characteristic in terms of electrical performance, and can withstand impact of an external harsh environment in terms of mechanical performance, to protect the antenna system from being affected by the external environment. The radome 40 may be mounted on the pole 20 or a tower via the antenna adjustment support 30, to facilitate signal receiving or transmitting of the antenna 10.

In addition, the base station may further include a radio frequency processing unit 50 and a signal processing unit 60. For example, the radio frequency processing unit 50 may be configured to: perform frequency selection, amplification, and down-conversion processing on a signal received by the antenna 10, convert the signal into an intermediate frequency signal or a baseband signal, and send the intermediate frequency signal or the baseband signal to the signal processing unit 60. Alternatively, the radio frequency processing unit 50 is configured to: perform up-conversion and amplification processing on an intermediate frequency signal of the signal processing unit 60, convert the signal into an electromagnetic wave via the antenna 10, and send the electromagnetic wave. The signal processing unit 60 may be connected to a feeding structure of the antenna 10 via the radio frequency processing unit 50, and is configured to process the intermediate frequency signal or the baseband signal sent by the radio frequency processing unit 50.

In a possible embodiment, as shown in FIG. 2, the radio frequency processing unit 50 and the antenna 10 may be integrally disposed, and the signal processing unit 60 is far away from the antenna 10. In some other embodiments, both the radio frequency processing unit 50 and the signal processing unit 60 may alternatively be far away from the antenna 10. The radio frequency processing unit 50 and the signal processing unit 60 may be connected via a cable 70.

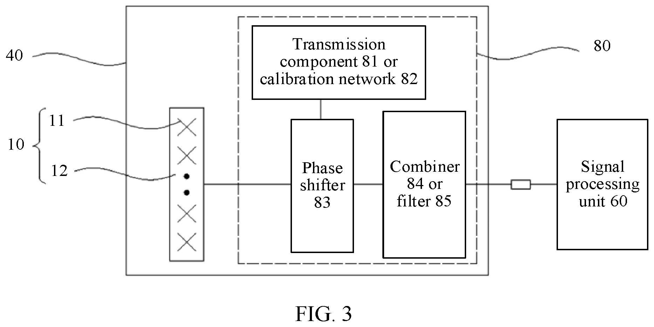

More specifically, refer to FIG. 2 and FIG. 3 together. FIG. 3 is a diagram of a structure of a base station antenna according to a possible embodiment of this application. As shown in FIG. 3, the antenna 10 of the base station may include a radiating element 11 and a reflection panel 12. The radiating element 11 may also be referred to as an antenna element, a radiating element, or the like. The radiating element 11 is an element that defines a basic structure of an antenna array, and can effectively radiate or receive an antenna signal. In the antenna 10, frequencies of different radiating elements 11 may be the same or different. The reflection panel 12 may also be referred to as a bottom panel, an antenna panel, a metal reflective surface, or the like. The reflection panel 12 may reflect and aggregate antenna signals on a reception point. The radiating element 11 is usually placed on a side surface of the reflection panel 12. This may not only greatly enhance a signal receiving or transmitting capability of the antenna 10, but also block and shield interference caused by another electromagnetic wave from a back side of the reflection panel 12 (the back side of the reflection panel 12 in this application is a side opposite to a side that is of the reflection panel 12 and on which the radiating element 11 is disposed) to antenna signal receiving.

In the antenna 10 of the base station, the radiating element 11 is connected to a feeding network 80. The feeding network 80 generally includes controlled-impedance transmission lines. The feeding network 80 may feed signals to the radiating element 11 based on specific amplitudes and phases, or send received signals to the signal processing unit 60 of the base station based on specific amplitudes and phases. In addition, the feeding network 80 may implement different radiation beam directions via a transmission component 81, or may be connected to a calibration network 82 to obtain a system-required calibration signal. The feeding network 80 may include a phase shifter 83, to change a maximum radiation direction of an antenna signal. Modules for enhancing performance, for example, a combiner 84 (which may be configured to combine signals of different frequencies into one channel for transmission via the antenna 10; or when used reversely, may be configured to divide signals received by the antenna 10 into a plurality of channels based on different frequencies for transmission to the signal processing unit 60 for processing), and a filter 85 (which is configured to filter out interference signals) may be further disposed in the feeding network 80.

The phase shifter provided in embodiments of this application may be adapted to the antenna 10 of the base station antenna, and is used as a part of the feeding network 80, to alter the maximum radiation direction of the antenna signal. In the existing base station antenna, a phase shifter has a large size, causing significant blockage to an antenna array, and affecting performance of the antenna array.

Based on this, an embodiment of this application provides a phase shifter, to reduce blockage to an antenna array, thereby improving performance of the antenna array. The following describes the phase shifter in detail.

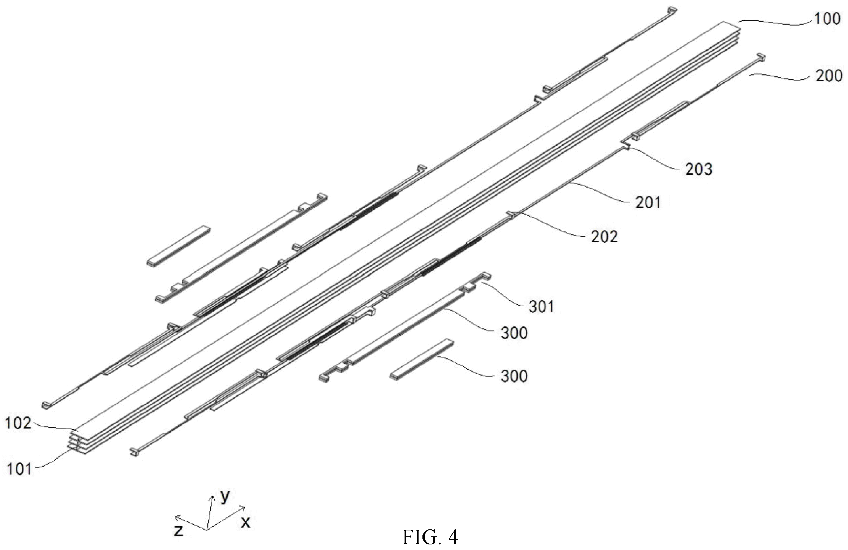

FIG. 4 is an exploded view of a structure of a phase shifter according to a possible embodiment of this application. For coordinate directions in the following figures, a direction indicated by an x-axis represents a first direction, a direction indicated by a y-axis represents a second direction, and a direction indicated by a z-axis represents a third direction. The second direction may be perpendicular to the first direction, and the third direction may be perpendicular to the first direction and the second direction. As shown in FIG. 4, in a possible embodiment, the phase shifter may include a cavity 100 and a stripline 200. The cavity 100 may include a side plate 101 and a plurality of partition plates 102, and the plurality of partition plates 102 are spaced apart on the side plate 101. For example, the side plate 101 extends in the first direction, so that the first direction may be understood as a length direction of the side plate 101, and the plurality of partition plates 102 may be spaced apart in the second direction. Specifically, spacings between adjacent partition plates 102 in the second direction may be the same or may be different. The partition plates 102 may be disposed perpendicular to the side plate 101, so that the plurality of partition plates 102 may be disposed in parallel to each other.

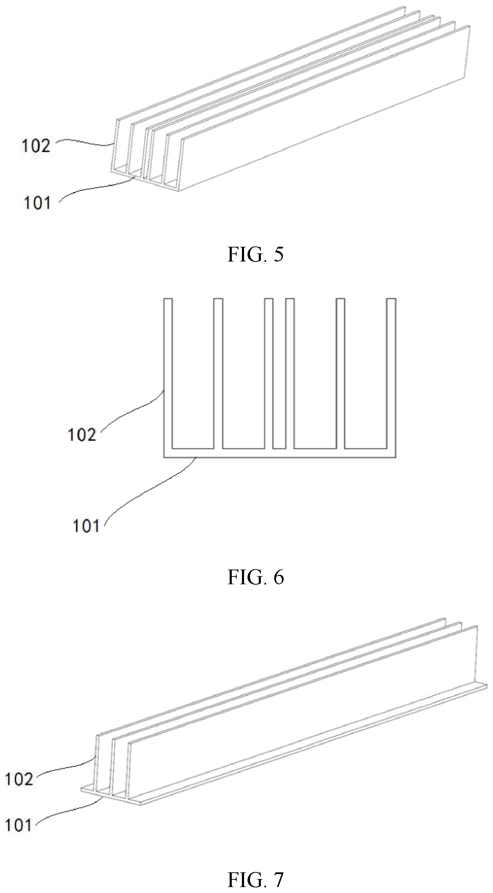

FIG. 5 is a diagram of a structure of the cavity of the phase shifter according to an embodiment of this application. FIG. 6 is a diagram of a structure of the cavity of the phase shifter according to an embodiment of this application. The plurality of partition plates 102 are separately connected to the side plate 101, the plurality of partition plates 102 and the side plate 101 define at least one accommodating space, and each accommodating space may be considered as a sub-cavity of the cavity 100. Specifically, there may be a plurality of cases of defining an accommodating space. For example, as shown in FIG. 5 and FIG. 6, one form of an accommodating space may be defined between two adjacent partition plates 102 and the side plate 101. In a cross section perpendicular to the first direction, a cross section of the two adjacent partition plates 102 and the side plate 101 is similarly U-shaped. For ease of description, this form of accommodating space may be correspondingly referred to as a U-shaped accommodating space.

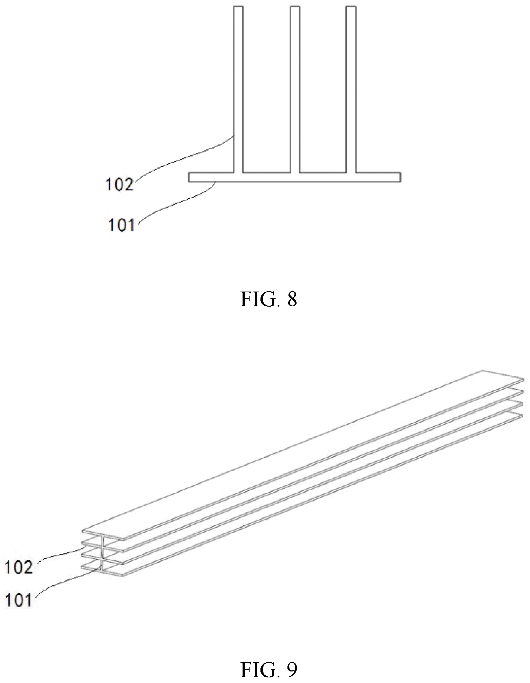

FIG. 7 is a diagram of another structure of the cavity of the phase shifter according to an embodiment of this application. FIG. 8 is a diagram of another structure of the cavity of the phase shifter according to an embodiment of this application. As shown in FIG. 7 and FIG. 8, an accommodating space may also be defined between an outermost partition plate 102 in the second direction and the side plate 101. In a cross section perpendicular to the first direction, a cross section of the outermost partition plate 102 and the side plate 101 is similarly L-shaped. For ease of description, this form of accommodating space may be correspondingly referred to as an L-shaped accommodating space. Therefore, the cavity 100 including the plurality of partition plates 102 and the side plate 101 is an open structure having at least one accommodating space. In other words, the cavity 100 including the plurality of partition plates 102 and the side plate 101 is an open structure having at least one sub-cavity.

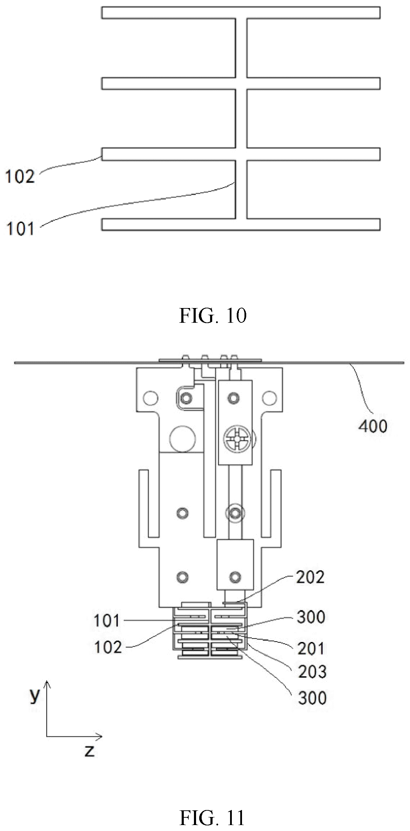

FIG. 9 is a diagram of another structure of the cavity of the phase shifter according to an embodiment of this application. FIG. 10 is a diagram of another structure of the cavity of the phase shifter according to an embodiment of this application. As shown in FIG. 9 and FIG. 10, during specific implementation, partition plates 102 may be disposed on both sides of the side plate 101 in the third direction. In this way, accommodating spaces may be defined on the both sides of the side plate 101 in the third direction, and the stripline 200 may be disposed on the both sides of the side plate 101 in the third direction. This can increase a layout space of the stripline 200 and improve layout flexibility of the stripline 200.

During specific implementation, as shown in FIG. 4, the stripline 200 may include a feeding portion 201 and an output portion 202. The feeding portion 201 may extend in the first direction, and the feeding portions 201 may be disposed in one or more accommodating spaces, that is, the feeding portion 201 may be separately disposed in one or more sub-cavities of the cavity 100. In addition, a dielectric portion 300 is disposed between the feeding portion 201 and a partition plate 102 corresponding to an accommodating space in which the feeding portion 201 is located. For example, at least a part of the feeding portion 201 is disposed in a U-shaped accommodating space, and a dielectric portion 300 is disposed between the feeding portion 201 and one of two adjacent partition plates 102 that define the U-shaped accommodating space, or a dielectric portion 300 is disposed between the feeding portion 201 and each of two adjacent partition plates 102 that define the U-shaped accommodating space, that is, the dielectric portions 300 are disposed on both sides of the feeding portion 201 in the second direction. At least a part of the feeding portion 201 is disposed in an L-shaped accommodating space, and a dielectric portion 300 is disposed between the feeding portion 201 and one partition plate 102 that defines the L-shaped accommodating space, that is, the dielectric portion 300 is disposed on one side of the feeding portion 201 in the second direction.

During specific implementation, the feeding portion 201 may be fixed in the cavity 100 via the dielectric portion 300. Specifically, when the dielectric portions 300 are disposed on the both sides of the feeding portion 201 in the second direction, the dielectric portions 300 on the both sides of the feeding portion 201 may be fixedly connected to corresponding partition plates 102 through bonding or the like; or one dielectric portion 300 in the dielectric portions 300 on the both sides of the feeding portion 201 is fixedly connected to a corresponding partition plate 102 through bonding or the like, the other dielectric portion 300 is slidably connected to a corresponding partition plate 102, and in this case, the feeding portion 201 may be fixedly connected, through bonding or the like, to one dielectric portion 300 that is fixedly connected to the partition plate 102; or the feeding portion 201 may be clamped by two dielectric portions 300. When the dielectric portion 300 is disposed on one side of the feeding portion 201 in the second direction, the dielectric portion 300 may be fixedly connected to the partition plate 102 through bonding or the like, and the feeding portion 201 may be fixedly connected to the dielectric portion 300 through bonding or the like.

FIG. 11 is a diagram of a structure of the phase shifter according to an embodiment of this application. With reference to FIG. 4 and FIG. 11, the output portion 202 is connected to the feeding portion 201, and extends outside the accommodating space. Specifically, the output portion 202 extends outside the cavity 100. The output portion 202 is physically and electrically connected to the feeding portion 201, and the output portion 202 may be considered as a structure extending outward from the feeding portion 201. During actual application, the output portion 202 is connected to a radiating element 400 of an antenna. Specifically, the output portion 202 is connected to a feeder of the radiating element 400, to implement a connection between the feeding portion 201 and the radiating element 400.

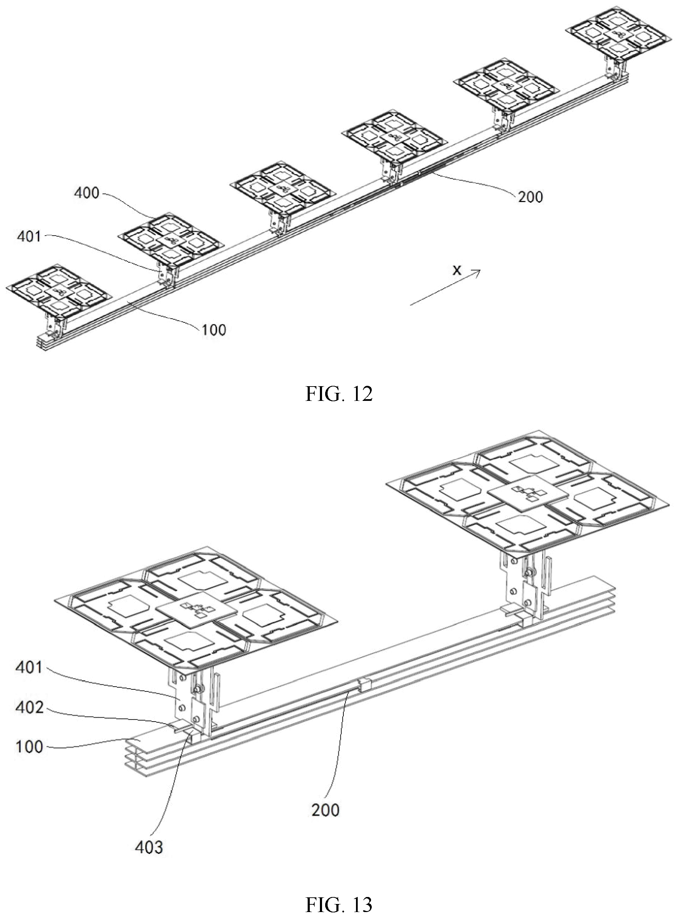

FIG. 12 is a diagram of a structure of an antenna according to an embodiment of this application. As shown in FIG. 12, when the phase shifter provided in this application is used in the antenna, a signal may be transmitted with a plurality of radiating elements 400. The plurality of radiating elements 400 may be arranged in a row in the first direction, and a balun 401 of each radiating element 400 is fixedly connected to the cavity 100. Specifically, with reference to FIG. 4, the balun 401 may be fixedly connected to an outermost partition plate 102 in the second direction. A feeder of each radiating element 400 may be electrically connected to one output portion 202, so that each radiating element 400 is electrically connected to the feeding portion 201. The feeding portion 201 may feed a signal to the plurality of radiating elements 400, or receive a signal received by the plurality of radiating elements 400. During specific implementation, the antenna may further include a reflection panel, and the reflection panel may be disposed at a plurality of positions. For example, the reflection panel and the radiating element 400 may be respectively disposed on both sides of the phase shifter in the second direction, that is, the phase shifter is disposed between the reflection panel and the radiating element 400. Specifically, the reflection panel and the phase shifter may be spaced apart. In other words, the phase shifter may be suspended relative to the reflection panel. The reflection panel and the radiating element 400 may alternatively be disposed on a same side of the phase shifter in the second direction. In this case, the balun of the radiating element 400 passes through the reflection panel, and the balun is not in contact with the reflection panel.

According to the phase shifter provided in this application, the cavity 100 is an open structure, facilitating pultrusion of a miniaturized profile and molding. In addition, the cavity 100 includes at least one sub-cavity, and the feeding portion 201 is disposed in the at least one sub-cavity. This can physically isolate feeding portions 201 located in different sub-cavities, and can avoid electromagnetic coupling between the feeding portions 201 located in the different sub-cavities, so that a distance between the feeding portions 201 located in the different sub-cavities can be reduced. Therefore, a cross-sectional area of the cavity 100 can be reduced, that is, a volume of the cavity 100 can be reduced, so that the cavity 100 can be miniaturized, that is, the phase shifter can be miniaturized. This can reduce blockage of the phase shifter to an antenna array, and reduce impact of the phase shifter on a radiation pattern of the antenna array, thereby improving performance of the antenna array.

During actual application, the dielectric portion 300 may be located below the radiating element 400 in the second direction, or the dielectric portion 300 may be located between two adjacent radiating elements 400, so that a phase difference can be achieved between the two adjacent radiating elements 400 by changing arrangement of the dielectric portion 300 (for example, whether there is the dielectric portion 300, or a position of the dielectric portion 300).

Because the cavity 100 is the open structure, the stripline 200 may be directly assembled into the cavity 100 in the third direction, that is, the stripline 200 may be directly assembled into the cavity 100 from both sides of the cavity 100, without a need to be assembled into the cavity 100 from one end of the cavity 100 in a length direction, thereby making assembly of the stripline 200 simple and implementation easy. In addition, the output portion 202 that extends outward from the feeding portion 201 may be directly connected to the radiating element 400, that is, no additional transition structure is needed between the stripline 200 and the radiating element 400, thereby reducing an insertion loss of a feeding network.

During specific implementation, a row of radiating elements 400 connected to a same cavity 100 share one stripline 200, so that the row of radiating elements 400 may form one antenna module, and a plurality of antenna modules form an antenna array. Therefore, the phase shifter provided in this application facilitates modularization of the antenna array. The phase shifter provided in this application may be used in a passive antenna, or may be used in an active antenna. The balun 401 of the radiating element 400 may be directly welded to the cavity 100 through laser welding, thereby achieving plating-free welding and reducing connection costs.

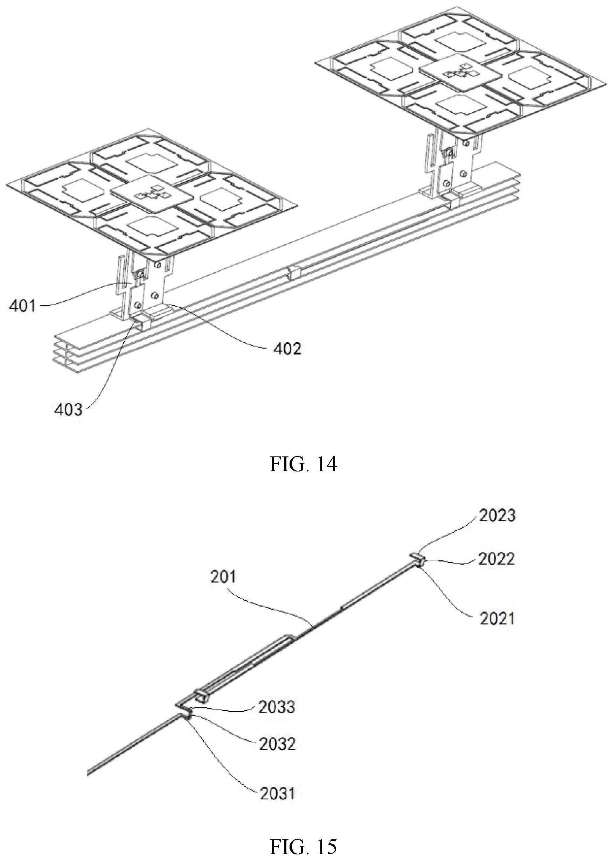

FIG. 13 is a diagram of a structure of the antenna according to an embodiment of this application. FIG. 14 is a diagram of another structure of the antenna according to an embodiment of this application. In a specific connection, as shown in FIG. 13, the balun 401 of the radiating element 400 may be perpendicular to the side plate 101, or as shown in FIG. 14, the balun 401 of the radiating element 400 may be parallel to the side plate 101. The feeder of the radiating element 400 may be directly connected to the output portion 202 through laser welding, and an additional transition portion 203 is not needed, thereby making a connection convenient and reducing a signal loss. In FIG. 10 and FIG. 11, a welding point between the balun 401 of the radiating element 400 and the cavity 100 is represented as a first welding point 402, and a welding point between the feeder of the radiating element 400 and the stripline 200 is represented as a second welding point 403.

FIG. 15 is a diagram of a structure of the stripline of the phase shifter according to an embodiment of this application. As shown in FIG. 15, the output portion 202 may include a first connecting section 2021 and a first transition section 2022, so that the output portion 202 extends outside the cavity 100. Specifically, one end of the first connecting section 2021 is connected to the feeding portion 201, the first transition section 2022 is located outside the accommodating space, and one end of the first transition section 2022 is connected to the other end of the first connecting section 2021. During actual application, the other end of the first transition section 2022 is connected to the radiating element 400 of the antenna, the output portion 202 is conveniently connected to the radiating element 400, and no additional transition portion 203 is needed. During specific implementation, the first connecting section 2021 and the first transition section 2022 may be disposed at an angle. For example, the first connecting section 2021 and the first transition section 2022 may be disposed perpendicular to each other.

During specific implementation, the output portion 202 may further include a second connecting section 2023, the second connecting section 2023 is located outside the accommodating space, and the first connecting section 2021, the first transition section 2022, and the second connecting section 2023 are sequentially connected. The other end of the first transition section 2022 is connected to one end of the second connecting section 2023, and the other end of a second transition section 2032 is connected to the radiating element 400 of the antenna, that is, the other end of the first transition section 2022 is connected to the radiating element 400 of the antenna via the second connecting section 2023. In this way, the output portion 202 can more easily access the radiating element 400, thereby making a connection to the radiating element 400 more convenient. Specifically, the second connecting section 2023 and the first transition section 2022 may be disposed at an angle. For example, the second connecting section 2023 and the first transition section 2022 may be disposed perpendicular to each other, so that a structure of the output portion 202 can be similarly U-shaped.

In a possible implementation, there may be a plurality of feeding portions 201, and the plurality of feeding portions 201 may be disposed in at least one accommodating space, thereby making a layout space of the stripline 200 large. For example, the cavity 100 includes three accommodating spaces, there are three feeding portions 201, and the three feeding portions 201 are respectively disposed in the three accommodating spaces. It may be understood that a quantity of feeding portions 201 may be greater than a quantity of accommodating spaces of the cavity 100, and a plurality of feeding portions 201 may be spaced apart in one accommodating space.

During specific implementation, the stripline 200 may further include the transition portion 203, and feeding portions 201 located in different accommodating spaces may be connected via the transition portion 203, that is, the stripline 200 can transition between the different accommodating spaces via the transition portion 203, so that no additional transition portion 203 is needed, thereby reducing a signal loss. The stripline 200 is divided into a plurality of feeding portions 201. During actual assembly, the plurality of feeding portions 201 may be disposed in the cavity 100, and then integrally connected via the transition portion 203, to implement a physical connection and an electrical connection, thereby making assembly of the stripline 200 convenient. Alternatively, the stripline 200 may be integrally bent to form a plurality of feeding portions 201 and a plurality of transition portions 203 that are disposed in the cavity 100. During actual application, different radiating elements 400 may be respectively connected to feeding portions 201 in different accommodating spaces.

During specific implementation, the transition portion 203 may include a third connecting section 2031, the second transition section 2032, and a fourth connecting section 2033 that are sequentially connected, one end of the third connecting section 2031 is connected to a feeding portion 201 located in one accommodating space, one end of the fourth connecting section 2033 is connected to a feeding portion 201 located in another accommodating space, the second transition section 2032 is located outside an accommodating space, and both ends of the second transition section 2032 are respectively connected to the other end of the third connecting section 2031 and the other end of the fourth connecting section 2033, so that feeding portions 201 in different accommodating spaces can be connected, the stripline 200 can transition between the different accommodating spaces, and no additional transition portion 203 is needed. Specifically, the second transition section 2032 may be separately disposed perpendicular to the third connecting section 2031 and the fourth connecting section 2033, so that a structure of the transition portion 203 can be similarly U-shaped as a whole.

In a possible implementation, there may be an overlapping part in projections of feeding portions 201 located in different accommodating spaces in the second direction, so that the stripline 200 can be meandered across the different accommodating spaces, to meet a plurality of use requirements. Because the cavity 100 has the plurality of sub-cavities and has sufficient layout spaces, the stripline 200 can be easily meandered, and a volume of the phase shifter does not need to be increased.

During specific implementation, there may be an overlapping part in projections of feeding portions 201 located in a same accommodating space in the third direction, so that the stripline 200 can be meandered in the same accommodating space. During specific implementation, the dielectric portion 300 may have a slot 301. In the second direction, the slot 301 is staggered from the overlapping part of the feeding portions 201 located in the same accommodating space in the third direction. It may be understood that the dielectric portion 300 in the second direction at a position corresponding to the overlapping part has a larger dimension, that is, a greater width; and the dielectric portion 300 in the second direction at a position staggered from the overlapping part has a smaller dimension, that is, a narrower width. This can ensure that the dielectric portion 300 corresponds to the feeding portion 201 in the second direction, reduce an area of the dielectric portion 300, improve effective utilization of the dielectric portion 300, and reduce costs.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit a protection scope of this application. Any variation or replacement readily figured out by a person skilled in the art within the technical scope disclosed in this application shall fall within the protection scope of this application.

## Claims

1. A phase shifter, comprising a cavity and a stripline, wherein
the cavity comprises a side plate and a plurality of partition plates, the plurality of partition plates are spaced apart on the side plate, and the plurality of partition plates and the side plate define at least one accommodating space; and
the stripline comprises a feeding portion and an output portion, the feeding portion is disposed in one or more accommodating spaces, a dielectric portion is disposed between the feeding portion and the partition plate corresponding to the accommodating space in which the feeding portion is located, the output portion is connected to the feeding portion and extends outside the accommodating space, and the output portion is configured to be connected to a radiating element of an antenna.

2. The phase shifter according to claim 1, wherein the output portion comprises a first connecting section and a first transition section, one end of the first connecting section is connected to the feeding portion, the first transition section is located outside the accommodating space, one end of the first transition section is connected to the other end of the first connecting section, and the other end of the first transition section is configured to be connected to the radiating element of the antenna.

3. The phase shifter according to claim 2, wherein the output portion further comprises a second connecting section, the second connecting section is located outside the accommodating space, and the other end of the first transition section is connected to the radiating element of the antenna via the second connecting section.

4. The phase shifter according to any one of claims 1 to 3, wherein there are a plurality of feeding portions, and the plurality of feeding portions are disposed in the at least one accommodating space; and
the stripline further comprises a transition portion, and the feeding portions located in different accommodating spaces are connected via the transition portion.

5. The phase shifter according to claim 4, wherein the transition portion comprises a third connecting section, a second transition section, and a fourth connecting section that are sequentially connected, one end of the third connecting section is connected to the feeding portion located in one accommodating space, one end of the fourth connecting section is connected to the feeding portion located in another accommodating space, the second transition section is located outside the accommodating space, and both ends of the second transition section are respectively connected to the other end of the third connecting section and the other end of the fourth connecting section.

6. The phase shifter according to claim 4 or 5, wherein there is an overlapping part in projections of the feeding portions located in the different accommodating spaces in a second direction, the second direction is perpendicular to a first direction, and the first direction is an extension direction of the side plate.

7. The phase shifter according to any one of claims 4 to 6, wherein there is an overlapping part in projections of the feeding portions located in a same accommodating space in a third direction, the third direction is perpendicular to the first direction and the second direction, the second direction is perpendicular to the first direction, and the first direction is the extension direction of the side plate.

8. The phase shifter according to claim 7, wherein the dielectric portion has a slot, and the slot is staggered from the overlapping part in the second direction.

9. The phase shifter according to any one of claims 1 to 8, wherein the partition plates are respectively disposed on both sides of the side plate in the third direction, the third direction is perpendicular to the first direction and the second direction, the second direction is perpendicular to the first direction, and the first direction is the extension direction of the side plate.

10. The phase shifter according to any one of claims 1 to 9, wherein the partition plates are disposed perpendicular to the side plate.

11. An antenna, comprising a radiating element and the phase shifter according to any one of claims 1 to 10, wherein
there are a plurality of radiating elements, the plurality of radiating elements are arranged in a first direction, and the first direction is an extension direction of the side plate;
a balun of each of the radiating elements is fixedly connected to the cavity; and
a feeder of each of the radiating elements is electrically connected to the feeding portion via the output portion.

12. The antenna according to claim 11, further comprising a reflection panel, wherein the reflection panel and the radiating element are respectively disposed on both sides of the phase shifter in a second direction, the reflection panel is spaced apart from the phase shifter, and the second direction is perpendicular to the extension direction of the side plate; or
the reflection panel and the radiating element are disposed on a same side of the phase shifter in the second direction, and the balun of the radiating element passes through the reflection panel.

13. A base station, comprising a signal processing unit and the antenna according to claim 11 or 12, wherein
the signal processing unit is electrically connected to the feeding portion, so as to be electrically connected to the radiating element.
